# EUROPÄISCHE PATENTANMELDUNG

(11) **EP 1 475 625 A1**
(43) Veröffentlichungstag der Anmeldung: **10.11.2004**
(21) Anmeldenummer: 03010515.9
(22) Anmeldetag: 09.05.2003
(51) Int. Cl.: G01M 17/007, G01M 7/08

(54) **Schutzeinrichtung für eine Prüfvorrichtung**

(71) Anmelder: CONCEPT Technologie GmbH, 8051 Graz (AT)
(72) Erfinder: Geir, Armin, 8010 Graz (AT)
(74) Vertreter: Manitz, Finsterwald & Partner GbR

(57) **Zusammenfassung**

Es wird eine Schutzeinrichtung für eine Prüfvorrichtung, mit der ein Prüfkörper entlang einer vorgegebenen Bewegungsbahn in Richtung eines zu prüfenden Gegenstandes bewegbar ist, beschrieben. Die Schutzvorrichtung umfasst zumindest eine Basiseinheit und wenigstens eine an der Basiseinheit bewegbar gelagerte Sicherungseinheit, die von einer Freigabeposition in eine Sicherungsposition bewegbar ist. Die vorgegebene Bewegungsbahn wird dabei durch die sich in der Sicherungsposition befindende Sicherungseinheit zumindest teilweise blockiert, während sie im wesentlichen vollständig freigegeben ist, wenn sich die Sicherungseinheit in der Freigabeposition befindet. Weiterhin ist die Erfindung auf eine Prüfvorrichtung mit einer solchen Schutzeinrichtung gerichtet.

## Beschreibung

Die vorliegende Erfindung betrifft eine Schutzeinrichtung für eine Prüfvorrichtung, mit der ein Prüfkörper entlang einer vorgegebenen Bewegungsbahn in Richtung eines zu prüfenden Gegenstandes bewegbar ist. Weiterhin ist die Erfindung auf eine Prüfvorrichtung mit einer solchen Schutzeinrichtung gerichtet.

Solche Prüfvorrichtungen werden beispielsweise beim Prüfen von Kraftfahrzeugen verwendet, um Aufschluss über die bei einem Unfall eines Kraftfahrzeuges, beispielsweise mit Fußgängern oder anderen Verkehrsteilnehmern, auftretenden Kräfte und Energien zu erhalten. Soll beispielsweise eine Kollision eines Kraftfahrzeuges mit einem Fußgänger simuliert werden, so kann der Prüfkörper dem Bein eines Fußgängers nachgebildet sein.

Um den gesetzlichen Vorschriften zu den Versuchen zum Schutze von Fußgängern bei Kollisionen mit Kraftfahrzeugen Rechnung zu tragen, wird ein derart ausgestalteter Prüfkörper gegen gesetzlich definierte Punkte an der Frontseite eines Kraftfahrzeuges (beispielsweise gegen den Stoßfänger) mit einer vorgegebenen Geschwindigkeit von beispielsweise 40 km/h geschossen. Je nach gewünschtem Versuch können dabei sowohl die Form des Prüfkörpers als auch die Position der Auftreffstellen und die Geschwindigkeiten variieren.

Wesentlich für eine korrekte Nachbildung der bei Unfällen entstehenden realen Kräfte und Energien ist es, dass der Prüfkörper frei fliegend am Aufprallpunkt auftrifft. Aufgrund der während des Aufprallvorganges vorhandenen elastischen Anteile bei den Verformungsvorgängen der Fahrzeugkarosserie wird der Prüfkörper nach dem Aufprall in einer Richtung entgegen der Abschussrichtung, d. h. in entgegengesetzter Richtung auf der ursprünglichen vorgegebenen Bewegungsbahn, zurückgeworfen, so dass er letztlich auf die Prüfvorrichtung auftreffen kann.

Bei diesem Rückprall treten so hohe Energien auf, dass Teile der Prüfvorrichtung, mit der der Prüfkörper abgeschossen wurde, beschädigt werden können. Durch den Aufprall des Prüfkörpers an Teilen der Prüfvorrichtung kommt es zu einem erneuten Richtungswechsel des Prüfkörpers, so dass ein zweiter Aufprall (Sekundäraufprall) am Kraftfahrzeug auftreten kann. Durch diesen Sekundäraufprall kann das Versuchsergebnis verfälscht werden.

Es ist eine Aufgabe der Erfindung, eine Prüfvorrichtung so auszugestalten, dass eine Beschädigung der Prüfvorrichtung durch einen rückprallenden Prüfkörper ausgeschlossen ist. Weiterhin soll eine Verfälschung der Versuchsergebnisse durch einen Sekundäraufprall am zu prüfenden Gegenstand verhindert werden.

Erfindungsgemäß wird diese Aufgabe durch eine Schutzeinrichtung der eingangs genannten Art gelöst, welche zumindest eine Basiseinheit und wenigstens eine an der Basiseinheit bewegbar gelagerte Sicherungseinheit umfasst, die von einer Freigabeposition in eine Sicherungsposition bewegbar ist, wobei die vorgegebene Bewegungsbahn durch die sich in der Sicherungsposition befindende Sicherungseinheit zumindest teilweise blockiert wird, während sie im Wesentlichen vollständig freigegeben ist, wenn sich die Sicherungseinheit in der Freigabeposition befindet.

Mit der erfindungsgemäßen Schutzeinrichtung wird sichergestellt, dass ein von dem zu prüfenden Gegenstand abprallender Prüfkörper nicht auf die Prüfvorrichtung auftreffen und diese beschädigen kann. Dadurch, dass die Sicherungseinheit in eine die Bewegungsbahn zumindest teilweise blockierende Sicherungsposition bewegt werden kann, ist gewährleistet, dass ein von dem zu prüfenden Gegenstand zurückprallender Prüfkörper auf die Sicherungseinheit und nicht auf Teile der Prüfvorrichtung auftrifft. Bevorzugt ist die Sicherungseinheit dabei so ausgebildet, dass durch den Aufprall des Prüfkörpers eine plastische Verformung der Sicherungseinheit erfolgt. Dadurch wird ein Abbau der beim Aufprall erzeugten Energie erreicht.

Gleichzeitig wird durch die Überführbarkeit der Sicherungseinheit in die die Bewegungsbahn im Wesentlichen vollständig freigebende Freigabeposition gewährleistet, dass sich die Prüfkörper beim Abschießen durch die Prüfvorrichtung ungehindert, frei fliegend entlang der vorgegebenen Bewegungsbahn in Richtung des zu prüfenden Gegenstandes bewegen können.

Nach einer vorteilhaften Ausführungsform der Erfindung ist die Sicherungseinheit zum Verstellen zwischen der Freigabeposition und der Sicherungsposition an der Basiseinheit schwenkbar gelagert. Durch eine schwenkbare Lagerung ist eine kostengünstige und zugleich reaktionsschnelle Ausbildung der Schutzeinrichtung möglich. Weiterhin ist dadurch auch eine einfache Ausbildung einer automatischen Schließvorrichtung möglich, wie sie weiter unten beschrieben wird. Grundsätzlich ist es jedoch auch möglich, dass die Sicherungseinheit zwischen der Freigabeposition und der Sicherungsposition verschiebbar ist. Auch sonstige geeignete Bewegungsmöglichkeiten, wie beispielsweise eine Auffaltung einer entsprechend ausgebildeten Sicherungseinheit sind denkbar.

Bevorzugt ist die Sicherungseinheit um eine im Wesentlichen senkrechte Achse verschwenkbar. Es ist prinzipiell jedoch auch möglich, dass die Schwenkachse horizontal oder in einem sonstigen Neigungswinkel verläuft.

Die Verschwenkbarkeit um eine senkrechte Achse hat insbesondere in Verbindung mit der weiter unten beschriebenen Ausbildung der Sicherungseinheit als Ablenkeinheit Vorteile, da in diesem Fall der auf die Sicherungseinheit aufprallende Prüfkörper seitlich abgelenkt wird.

Nach einer weiteren vorteilhaften Ausführungsform der Erfindung wird durch die sich in der Sicherungsposition befindende Sicherungseinheit ein Auftreffen des von dem zu prüfenden Gegenstand abprallenden Prüfkörpers auf die Prüfvorrichtung verhindert. Dabei kann die vorgegebene Bewegungsbahn sowohl nur teilweise oder vollständig von der Sicherungseinheit blockiert werden. Wesentlich ist, dass ein von dem zu prüfenden Gegenstand abprallender Prüfkörper sich nicht entlang der vorgegebenen Bewegungsbahn entgegengesetzt zu seiner ursprünglichen Bewegungsrichtung bis zu der Prüfrichtung hin bewegen und letztlich auf diese auftreffen kann.

Nach einer weiteren bevorzugten Ausführungsform der Erfindung ist die Sicherungseinheit als Ablenkeinheit für den von dem zu prüfenden Gegenstand abprallenden Prüfkörper ausgebildet. Bevorzugt wird durch die Ablenkeinheit ein von dem zu prüfenden Gegenstand abprallender und auf die Ablenkeinheit auftreffender Prüfkörper in eine von der vorgegebenen Bewegungsbahn abweichende Richtung gelenkt, wobei die Abweichung insbesondere so groß ist, dass ein weiterer Aufprall des abgelenkten Prüfkörpers auf den zu prüfenden Gegenstand vermieden wird. Die Ablenkung des auf die Ablenkeinheit auftreffenden Prüfkörpers kann dabei durch eine entsprechende Ausgestaltung der Oberfläche der Ablenkeinheit erreicht werden.

Bevorzugt schließt dabei in der Sicherungsposition die zu dem zu prüfenden Gegenstand hin gerichtete Oberfläche der Ablenkeinheit mit der Bewegungsrichtung des Prüfkörpers einen Winkel größer als 90°, insbesondere größer als 100°, bevorzugt größer als 130° ein. Grundsätzlich kann die Ablenkung auch beispielsweise durch eine abgerundete Oberfläche der Ablenkeinheit erreicht werden. Wesentlich ist, dass die Ablenkeinheit so ausgebildet und angeordnet ist, dass der von der Ablenkeinheit zurückprallende Prüfkörper nicht entlang der ursprünglichen, vorgegebenen Bewegungsbahn in Richtung des zu prüfenden Gegenstandes bewegt wird und ein zweites Mal an diesem Gegenstand aufprallt.

In einer weiteren vorteilhaften Ausführungsform der Erfindung umfasst die Sicherungseinheit zumindest ein an der Basiseinheit bewegbar, insbesondere verschwenkbar, gelagertes Türelement. Bevorzugt können auch zwei oder mehr Türelemente vorgesehen sein, die vorteilhaft um dieselbe Schwenkachse verschwenkbar sind und sich insbesondere ohne wesentlichen Abstand aneinander anschließen. Durch die Ausbildung als Türelemente ist eine besonders einfache und kostengünstige Gestaltung der Sicherungseinheit möglich.

Vorteilhaft ist die Ablenkeinheit so ausgebildet, dass der auf die Ablenkeinheit auftreffende Prüfkörper seitlich abgelenkt wird. Dies kann beispielsweise dadurch erreicht werden, dass bei einer Ausbildung der Sicherungseinheit als zumindest ein Türelement das Türelement um eine senkrechte Schwenkachse verschwenkbar ist und das freie Ende des Türelementes in der Sicherungsposition näher zu dem zu prüfenden Gegenstand hin gelegen ist als das zur Schwenkachse hin gelegene Ende des Türelementes.

Grundsätzlich ist auch denkbar, dass die Sicherungseinheit als Auffangeinheit für den von dem zu prüfenden Gegenstand abprallenden Prüfkörper ausgebildet ist. Die Auffangeinheit ist dabei so ausgebildet, dass ein Zurückprallen des Prüfkörpers von der Auffangeinheit sicher vermieden wird, so dass ein Sekundäraufprall auf den zu prüfenden Gegenstand ausgeschlossen ist. Die Auffangeinheit kann dabei beispielsweise als Netz oder Käfig oder auch als in Richtung zu dem prüfenden Gegenstand offener, mit einer Verschlusseinheit, beispielsweise einer Abdeckklappe verschließbarer Auffangbehälter ausgebildet sein.

Nach einer weiteren vorteilhaften Ausführungsform der Erfindung ist eine automatische Schließvorrichtung vorgesehen, durch die die Sicherungseinheit, nach Abschießen des Prüfkörpers durch die Prüfvorrichtung, automatisch von der Freigabeposition in die Sicherungsposition überführt wird. Insbesondere, wenn der Prüfkörper mit einer relativ hohen Geschwindigkeit abgeschossen wird und der Abstand zwischen der Prüfvorrichtung und dem zu prüfenden Gegenstand relativ klein ist (beispielsweise zwischen 0,5 und 5 m, insbesondere ca. 1 m), folgen der Abschuss und der Rückprall des Prüfkörpers so dicht hintereinander, dass eine sichere Funktion der Schutzeinrichtung nur durch eine automatische Schließvorrichtung gewährleistet werden kann. Typische Zeiten für den Schließvorgang betragen beispielsweise ca. 10 - 60 ms, insbesondere ca. 40 ms.

Bevorzugt umfasst die automatische Schließvorrichtung zumindest ein Federelement, das bei sich in der Freigabeposition befindender Sicherungseinheit eine Vorspannung der Sicherungseinheit in Richtung der Sicherungsposition bewirkt. Die Sicherungseinheit kann dabei durch eine Verriegelungseinheit in der Freigabeposition entgegen der Federvorspannung gehalten werden. Auf diese Weise ist eine sehr einfache und kostengünstige Ausgestaltung der automatischen Schließvorrichtung möglich. Grundsätzlich ist es jedoch auch möglich, dass die Schließvorrichtung einen Motor, beispielsweise einen Elektromotor, umfasst, mit der die Sicherungseinheit von der Freigabeposition in die Sicherungsposition zurück gebracht werden kann. Auch eine pneumatische, hydraulische oder magnetische Ansteuerung der Schließvorrichtung oder auch eine pyrotechnische Auslösung sind grundsätzlich denkbar.

Nach einer weiteren vorteilhaften Ausführungsform der Erfindung ist die automatische Schließvorrichtung durch den abgeschossenen Prüfkörper und/oder durch die Prüfvorrichtung aktivierbar. Beispielsweise kann ein Sensor zur Erfassung zumindest einer vorgegebenen Position des abgeschossen Prüfkörpers vorhanden sein, durch den die automatische Schließvorrichtung aktivierbar ist, wenn der abgeschossene Prüfkörper die vorgegebene Position erreicht.

Vorteilhaft kann ein solcher Sensor als berührungslos wirkender Sensor, insbesondere als optischer oder induktiver Sensor, oder als mechanischer Sensor ausgebildet sein. Bei einer Ausbildung als optischer Sensor ist beispielsweise die Anbringung einer Lichtschranke möglich, die unterbrochen wird, wenn der Prüfkörper den Abschussbereich der Prüfvorrichtung verlassen hat und die Sicherungseinheit passiert. Aufgrund des Ausgangssignals der Lichtschranke kann dann die Sicherungseinheit automatisch von der Freigabeposition in die Sicherungsposition überführt werden. Insbesondere kann eine Verriegelung der Sicherungseinheit gelöst werden, so dass diese beispielsweise aufgrund einer Federvorspannung automatisch in die Sicherungsposition verbracht wird.

Grundsätzlich ist es auch möglich, dass eine den Abschuss des Prüfkörpers steuernde Steuereinheit der Prüfvorrichtung in Abhängigkeit von vorgegebenen Parametern, wie beispielsweise einem vorgegebenen Zeitintervall, die automatische Schließvorrichtung aktiviert.

Bei der Ausbildung als mechanischer Sensor, beispielsweise als Schalter, wird dieser bevorzugt nicht durch den Prüfkörper selbst betätigt, da in diesem Falle die Bewegung des Prüfkörpers gestört würde. In diesem Fall ist es möglich, dass ein entsprechender Schalter beispielsweise durch einen Teil sich bewegenden Teil der Prüfvorrichtung betätigt wird, der die Bewegung des Prüfkörpers verursacht, so dass auf diese Weise die automatische Schließvorrichtung aktiviert wird.

Nach einer weiteren bevorzugten Ausführungsform der Erfindung sind die Schutzeinrichtung und die Prüfvorrichtung als separate Einheiten ausgebildet. Grundsätzlich ist es auch möglich, dass die Schutzeinrichtung und die Prüfvorrichtung eine gemeinsame Einheit bilden. Bei einer separaten Ausbildung kann die Schutzeinrichtung auch zum Nachrüsten bereits vorhandener Prüfvorrichtungen verwendet werden. Der Vorteil bei der Ausbildung als gemeinsame Einheit liegt darin, dass eine Justierung der Schutzeinrichtung und der Prüfvorrichtung zueinander entfallen kann.

Weitere vorteilhafte Ausführungsformen der Erfindung sind in den Unteransprüchen angegeben.

Die Erfindung wird nachfolgend anhand eines Ausführungsbeispiels unter Bezugnahme auf die Zeichnungen näher beschrieben; in diesen zeigen:
- Fig. 1: eine schematische, perspektivische Darstellung einer erfindungsgemäß ausgebildeten Schutzeinrichtung,
- Fig. 2: eine Draufsicht auf die Schutzeinrichtung nach Fig. 1 vor Abschießen eines Prüfkörpers, und
- Fig. 3: eine Draufsicht auf die Schutzeinrichtung nach Fig. 1 nach Abschießen eines Prüfkörpers.

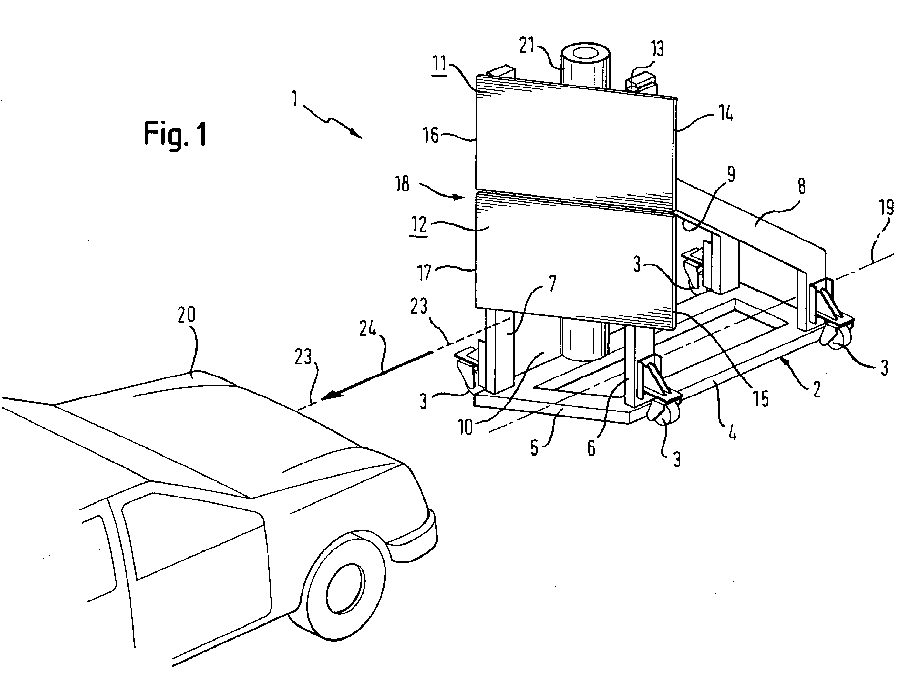

Fig. 1 zeigt eine Schutzeinrichtung 1, die eine Basiseinheit 2 in Form einer verfahrbaren Trägerkonstruktion mit Rollen 3 umfasst. Die Basiseinheit 2 umfasst ein trapezförmiges Grundgestell 4, dessen parallele Grundlinien die seitlichen Begrenzungen des Grundgestells 4 bilden. Der rückwärtige Schenkel des Grundgestells 4 verläuft nicht schräg, sondern senkrecht zu den Grundlinien, während der schräge Schenkel den nach vorne gerichteten Abschluss 5 des Grundgestells bildet, dessen in Fig. 1 links gelegenes Ende gegenüber dem in Fig. 1 rechts gelegenen Ende nach vorne versetzt ist.

An den beiden Enden des schrägen Abschlusses 5 sind sich senkrecht nach oben erstreckende Träger 6, 7 vorgesehen, welche jeweils über schräg verlaufende Abschnittselemente 8, 9 gegen das rückwärtig gelegene Ende des Grundgestells 4 abgestützt sind.

Die beiden Träger 6, 7 bilden zwischen sich einen Durchgangsbereich 10, der von zwei plattenförmigen Türelementen 11, 12 teilweise versperrt ist.

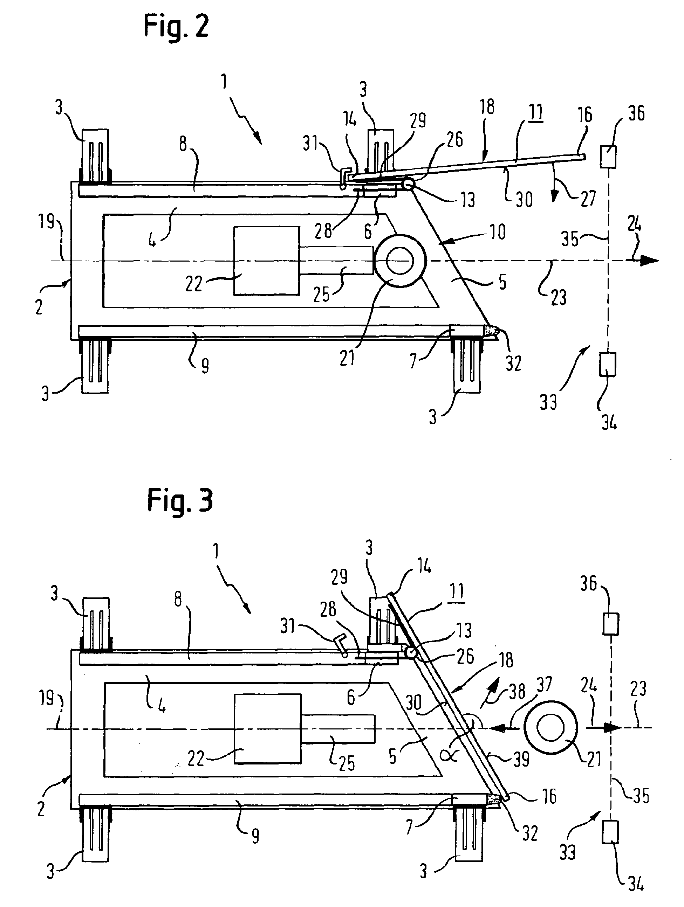

Die Türelemente 11, 12 sind an dem nach hinten versetzten Träger 6 über eine senkrecht an dem Träger 6 vorgesehene Drehachse 13 verschwenkbar gelagert, wie es insbesondere in den Figuren 2 und 3 zu erkennen ist.

Aufgrund der versetzten Anordnung der Träger 6, 7 sind die Türelemente 11, 12 so angeordnet, dass ihre der Drehachse 13 zugeordneten Enden 14, 15 gegenüber ihren freien Enden 16, 17 zurückversetzt sind. Die Türelemente 11, 12 bilden gemäß der Erfindung eine Sicherungseinheit 18, deren nach vorne gerichtete Oberfläche 39 schräg zu einer parallel zu den Grundlinien des Grundgestells 4 verlaufenden Längsachse 19 angeordnet ist und mit dieser einen Winkel α einschließt.

Im Bereich vor der Schutzeinrichtung 1 (in Fig. 1 links dargestellt) befindet sich in Verlängerung der Längsachse 19 ein als Kraftfahrzeug 20 ausgebildeter zu prüfender Gegenstand.

Weiterhin ist hinter den Türelemente 11, 12 im Inneren der Schutzeinrichtung 1 ein Prüfkörper 21 angeordnet, der von einer in Fig. 1 nicht dargestellten Prüfvorrichtung 22 (siehe Figuren 2 und 3) in der in Fig. 1 dargestellten Position gehalten wird. Die Prüfvorrichtung kann dabei, wie in den Fig. 2 und 3 gezeigt, vollständig oder nur teilweise, z.B. mit ihrer Abschusseinheit 25 innerhalb der Schutzeinrichtung 1 angeordnet sein

Wie unter Bezugnahme auf die Figuren 2 und 3 anschließend noch näher erläutert wird, ist der Prüfkörper 21 durch die Prüfvorrichtung 22 entlang einer durch eine gestrichelte Linie 23 dargestellten Bewegungsbahn in Richtung eines Pfeils 24 bewegbar, um die beim Aufprall des Prüfkörpers 21 auf die Vorderseite des Kraftfahrzeugs 20 auftretenden Kräfte und Energien nachbilden und untersuchen zu können.

Um ein Abschießen des Prüfkörpers 21 durch die Prüfrichtung 22 in Richtung des Kraftfahrzeugs 20 zu ermöglichen, ist gemäß Fig. 2 die durch die Türelemente 11, 12 gebildete Sicherungseinheit 18 um die Drehachse 13 in eine Freigabeposition verschwenkbar, in der die Bewegungsbahn 23 und damit verbunden der Durchgangsbereich 10 im Wesentlichen vollständig freigegeben sind.

Befindet sich die Sicherungseinheit 18 in der in Fig. 2 dargestellten Freigabeposition, so kann der Prüfkörper 21 durch eine Abschusseinheit 25 der Prüfvorrichtung 22 ungehindert und frei in Richtung des Pfeils 24 entlang der Bewegungsbahn 23 geschossen werden.

In der in Fig. 2 dargestellten Freigabeposition ist die durch die Türelemente 11, 12 gebildete Sicherungseinheit 18 durch eine oder mehrere die Drehachse 13 umschließende Schraubentorsionsfedern 26 in Richtung eines Pfeils 27 vorgespannt. Während das eine freie Ende 28 einer der Schraubentorsionsfedern 26 jeweils fest mit dem Träger 6 verbunden ist bzw. an diesem anliegt, liegt jeweils das andere freie Ende 29 der Schraubentorsionsfeder 26 an der Rückseite 30 der Sicherungseinheit 18 an, so dass die Sicherungseinheit 18 in Richtung des Pfeils 27 vorgespannt ist. Die Sicherungseinheit 18 wird in Fig. 2 dabei durch eine Verriegelungseinheit 31 in der dargestellten Freigabestellung gegen die Vorspannung der Schraubentorsionsfeder 26 gehalten. Die Verriegelungseinheit 31 bildet zusammen mit der Schraubentorsionsfeder 26 eine automatische Schließvorrichtung, durch die die Sicherungseinheit 18 automatisch von der in Fig. 2 dargestellten Freigabeposition in die in Fig. 3 dargestellte Sicherungsposition überführbar ist.

In der in Fig. 3 dargestellten Sicherungsposition ist die Bewegungsbahn 23 und damit der Durchgangsbereich 10 von der durch die Türelemente 11, 12 gebildeten Sicherungseinheit 18 teilweise blockiert, wie es auch aus Fig. 1 zu erkennen ist. Die freien Enden 16, 17 der Türelemente 11, 12 liegen dabei an Anschlagselementen 32 an, die an der Vorderseite des Trägers 7 vorgesehen sind und als Dämpfungselement ausgebildet sein können.

Weiterhin ist aus Fig. 3 zu erkennen, dass die Schraubentorsionsfeder 26 gegenüber der in Fig. 2 gezeigten Darstellung teilweise entspannt ist, wobei durch den Aufweitungsvorgang der Schraubentorsionsfeder 26 die Sicherungseinheit 18 in Richtung des Pfeils 27 von der in Fig. 2 dargestellten Freigabeposition in die in Fig. 3 dargestellte Sicherungsposition verbracht wurde.

Das Entriegeln der Verriegelungseinheit 31 und damit die Aktivierung der automatischen Schließvorrichtung wird durch eine Lichtschranke 33 gesteuert, die in den Figuren 2 und 3 schematisch angedeutet ist. Die Lichtschranke 33 umfasst eine einen Lichtstrahl 35 aussendenden Sensor 36 sowie einen den ausgesandten Lichtstrahl 35 empfangenden Sensor 36, dessen Ausgang mit einer nicht dargestellten Steuerung der Verriegelungseinheit 31 verbunden ist. Wird der ausgesandte Lichtstrahl 35 durch den sich entlang der Bewegungsbahn 23 bewegenden Prüfkörper 21 unterbrochen, so wird über den Sensor 36 die Verriegelungseinheit 31 gelöst, so dass die Sicherungseinheit 18 automatisch in die in Fig. 3 dargestellte Sicherungsposition bewegt wird.

Der Prüfkörper 21 triff an der gewünschten Stelle des Kraftfahrzeugs 20 auf und wird aufgrund elastischer Anteile bei den Verformungsvorgängen während des Aufpralls entgegen der durch den Pfeil 24 dargestellten Abschussrichtung zurückgeworfen, wie es in Fig. 3 durch einen Pfeil 37 angedeutet ist. Der Prüfkörper 21 prallt auf die schräg angeordnete Vorderseite der Sicherungseinheit 18 auf und wird aufgrund dieser schrägen Anordnung nicht wiederum in Richtung des Pfeil 34, sondern schräg in Richtung eines Pfeils 38 abgelenkt.

Auf diese Weise ist sichergestellt, dass der Prüfkörper 21 nicht ein zweites Mal auf das Kraftfahrzeug 20 aufprallt und die Testergebnisse durch einen solchen Sekundäraufprall verfälscht.
Weiterhin ist durch die Sicherungseinheit 18 gewährleistet, dass der von dem Fahrzeug 20 zurückprallende Prüfkörper 21 nicht auf die Prüfvorrichtung 22 auftrifft, was zu Beschädigungen der Prüfvorrichtung 22 führen würde.

### Bezugszeichenliste

- 1: Schutzeinrichtung
- 2: Basiseinheit
- 3: Rollen
- 4: Grundgestell
- 5: Abschluss
- 6: Träger
- 7: Träger
- 8: Abstützelement
- 9: Abstützelement
- 10: Durchgangsbereich
- 11: Türelement
- 12: Türelement
- 13: Drehachse
- 14: Ende des Türelementes 11
- 15: Ende des Türelementes 12
- 16: freies Ende des Türelementes 11
- 17: freies Ende des Türelementes 12
- 18: Sicherungseinheit
- 19: Längsachse
- 20: Kraftfahrzeug
- 21: Prüfkörper
- 22: Prüfvorrichtung
- 23: Bewegungsbahn
- 24: Pfeil
- 25: Abschusseinheit
- 26: Schraubentorsionsfeder
- 27: Pfeil
- 28: freies Ende der Schraubentorsionsfeder
- 29: freies Ende der Schraubentorsionsfeder
- 30: Rückseite der Sicherungseinheit
- 31: Verriegelungseinheit
- 32: Anschlagselement
- 33: Lichtschranke
- 34: Sender
- 35: Lichtstrahl
- 36: Sensor
- 37: Pfeil
- 38: Pfeil
- 39: Oberfläche der Sicherungseinheit

## Patentansprüche

1. Schutzeinrichtung für eine Prüfvorrichtung (22), mit der ein Prüfkörper (21) entlang einer vorgegebenen Bewegungsbahn (23) in Richtung eines zu prüfenden Gegenstandes (20) bewegbar ist, mit zumindest einer Basiseinheit (2) und wenigstens einer an der Basiseinheit (2) bewegbar gelagerten Sicherungseinheit (18), die von einer Freigabeposition in eine Sicherungsposition bewegbar ist, wobei die vorgegebene Bewegungsbahn (23) durch die sich in der Sicherungsposition befindende Sicherungseinheit (18) zumindest teilweise blockiert wird, während sie im Wesentlichen vollständig freigegeben ist, wenn sich die Sicherungseinheit (18) in der Freigabeposition befindet.

2. Schutzeinrichtung nach Anspruch 1,
**dadurch gekennzeichnet,**
**dass** die Sicherungseinheit (18) zum Verstellen zwischen der Freigabeposition und der Sicherungsposition an der Basiseinheit (2) schwenkbar gelagert ist.

3. Schutzeinrichtung nach Anspruch 2,
**dadurch gekennzeichnet,**
**dass** die Sicherungseinheit (18) um eine im Wesentlichen senkrechte Achse (13) verschwenkbar ist.

4. Schutzeinrichtung nach einem der vorhergehenden Ansprüche,
**dadurch gekennzeichnet,**
**dass** durch die sich in der Sicherungsposition befindende Sicherungseinheit (18) ein Auftreffen des von dem zu prüfenden Gegenstand (20) abprallenden Prüfkörpers (21) auf die Prüfvorrichtung (22) verhindert wird.

5. Schutzeinrichtung nach einem der vorhergehenden Ansprüche,
**dadurch gekennzeichnet,**
**dass** die Sicherungseinheit (18) als Ablenkeinheit für den von dem zu prüfenden Gegenstand (20) abprallenden Prüfkörper (21) ausgebildet ist

6. Schutzeinrichtung nach Anspruch 5,
**dadurch gekennzeichnet,**
**dass** durch die Ablenkeinheit (18) ein von dem zu prüfenden Gegenstand (20) abprallender und auf die Ablenkeinheit (18) auftreffender Prüfkörper (21) in eine von der vorgegebenen Bewegungsbahn (23) abweichende Richtung (38) abgelenkt wird, wobei die Abweichung insbesondere so groß ist, dass ein weiterer Aufprall des abgelenkten Prüfkörpers (21) auf den zu prüfenden Gegenstand (20) vermieden wird.

7. Schutzeinrichtung nach Anspruch 6,
**dadurch gekennzeichnet,**
**dass** in der Sicherungsposition die zu dem zu prüfenden Gegenstand (20) hin gerichtete Oberfläche (39) der Ablenkeinheit (18) mit der Bewegungsbahn (23) des Prüfkörpers (21) einen Winkel (α) größer als 90°, insbesondere größer als 100°, bevorzugt größer als 130° einschließt.

8. Schutzeinrichtung nach einem der vorhergehenden Ansprüche,
**dadurch gekennzeichnet,**
**dass** die Sicherungseinheit (18) zumindest ein an der Basiseinheit (2) bewegbar, insbesondere verschwenkbar, gelagertes Türelement (11, 12) umfasst.

9. Schutzeinrichtung nach einem der vorhergehenden Ansprüche, **dadurch gekennzeichnet,**
**dass** die Sicherungseinheit (18) als Auffangeinheit für den von dem zu prüfenden Gegenstand (20) abprallenden Prüfkörper (21) ausgebildet ist.

10. Schutzeinrichtung nach einem der vorhergehenden Ansprüche,
**dadurch gekennzeichnet,**
**dass** eine automatische Schließvorrichtung (26, 31) vorgesehen ist, durch die die Sicherungseinheit (18), nach Abschießen des Prüfkörpers (21) durch die Prüfvorrichtung (22), automatisch von der Freigabeposition in die Sicherungsposition überführt wird.

11. Schutzeinrichtung nach Anspruch 10,
**dadurch gekennzeichnet,**
**dass** die automatische Schließvorrichtung (26, 31) zumindest ein Federelement (26) umfasst, das bei sich in der Freigabeposition befindender Sicherungseinheit (18) eine Vorspannung der Sicherungseinheit (18) in Richtung der Sicherungsposition bewirkt.

12. Schutzeinrichtung nach Anspruch 10 oder 11,
**dadurch gekennzeichnet,**
**dass** die automatische Schließvorrichtung (26, 31) durch den abgeschossenen Prüfkörper (21) und/oder durch die Prüfvorrichtung (22) aktivierbar ist.

13. Schutzeinrichtung nach Anspruch 10, 11 oder 12
**dadurch gekennzeichnet,**
**dass** ein Sensor (36) zur Erfassung zumindest einer vorgegebenen Position des abgeschossenen Prüfkörpers (21) vorhanden ist, durch den die automatische Schließvorrichtung (26, 31) aktivierbar ist, wenn der abgeschossenen Prüfkörper (21) die vorgegebene Position erreicht.

14. Schutzeinrichtung nach Anspruch 13,
**dadurch gekennzeichnet,**
**dass** der Sensor (36) als berührungslos wirkender Sensor, insbesondere als optischer oder induktiver Sensor, oder als mechanischer Sensor ausgebildet ist.

15. Schutzeinrichtung nach einem der Ansprüche 10 bis 14,
**dadurch gekennzeichnet,**
**dass** durch die automatische Schließvorrichtung (26, 31) die Sicherungseinheit (18) so schnell von der Freigabeposition in die Sicherungsposition überführbar ist, dass die vorgegebene Bewegungsbahn (23) von der Sicherungseinheit (18) bereits blockiert ist, wenn ein von dem zu prüfenden Gegenstand (20) abprallender Prüfkörper (21) auf die Sicherungseinheit (18) auftrifft.

16. Schutzeinrichtung nach einem der vorhergehenden Ansprüche,
**dadurch gekennzeichnet,**
**dass** die Schutzreinrichtung (1) und die Prüfvorrichtung (22) als separate Einheiten ausgebildet sind oder dass die Schutzeinrichtung (1) und die Prüfvorrichtung (22) eine gemeinsame Einheit bilden.

17. Schutzeinrichtung nach einem der vorhergehenden Ansprüche,
**dadurch gekennzeichnet,**
**dass** die Prüfvorrichtung (22) zum Prüfen von Kraftfahrzeugen (20) ausgebildet ist.

18. Prüfvorrichtung mit zumindest einer Abschusseinheit (25), mit der ein Prüfkörper (21) entlang einer vorgegebenen Bewegungsbahn (23) in Richtung eines zu prüfenden Gegenstandes (20) bewegbar ist,
**dadurch gekennzeichnet,**
**dass** eine Schutzeinrichtung (1) nach einem der vorhergehenden Ansprüche vorgesehen ist.
